# EUROPEAN PATENT APPLICATION

(11) **EP 4 718 233 A1**
(43) Date of publication of application: **01.04.2026**
(21) Application number: 25197612.2
(22) Date of filing: 22.08.2025
(51) Int. Cl.: G06F 8/30, G05B 19/05, G06N 3/0475

(54) **GENERATING CONTROLLER LOGIC USING LLMS**

(30) Priority: 25.09.2024 IN 202411072369
(71) Applicant: Honeywell International Inc., Charlotte, NC 28202 (US)
(72) Inventor: SARKAR, Archisman, Charlotte, 28202 (US); GADDAM, Narendar Reddy, Charlotte, 28202 (US); UPPALURI, Savitha Krishna, Charlotte, 28202 (US); MOHAN, Varun, Charlotte, 28202 (US)
(74) Representative: Haseltine Lake Kempner LLP

(57) **Abstract**

Embodiments of the present disclosure relate to generating controller logic. Indication of a controller logic generation request associated with an asset identifier may be received. A prompt template set associated with a controller logic generation workflow may be identified based on the asset identifier. The prompt template of the prompt template set may comprise one or more instruction sets. The prompt template set may be input into a large language model comprising one or more transformer neural networks and configured to generate a controller logic configuration file for the asset identifier based on the prompt template set and intent classification associated with each prompt template. The controller logic configuration file may be received from the large language model. Performance of one or more prediction-based actions may be initiated based on the controller logic configuration file.

## Description

### TECHNICAL FIELD

The present disclosure relates, generally, to controller logic. Example embodiments provide systems, apparatuses, methods, and computer program products for generating controller logic for controllers using generative artificial intelligence.

### BACKGROUND

Controllers, such as industrial embedded controllers (e.g., programmable logic controllers (PLCs), distributed control system (DCS) controllers, and/or the like) are used across various industries and applications for process control, monitoring, and/or automation. These controllers are operated using logic/programs generated for the respective controller. Applicant has discovered problems with current techniques for generating controller logic. Through applied effort, ingenuity, and innovation, Applicant has solved many of these identified problems by developing solutions embodied in the present disclosure, which are described in detail below.

### BRIEF SUMMARY

In accordance with one aspect of the present disclosure, a computer-implemented method for generating controller logic is provided. The computer-implemented method is executable utilizing any of a myriad of computing device(s) and/or combinations of hardware, software, and/or firmware. In some example embodiments, an example computer-implemented method comprises receiving, by one or more processors, indication of a controller logic generation request associated with an asset identifier; identifying, by the one or more processors and based on the asset identifier, a prompt template set associated with a controller logic generation workflow, wherein each prompt template of the prompt template set comprises one or more instruction sets; inputting, by the one or more processors, the prompt template set into a large language model comprising one or more transformer neural networks and configured to generate a controller logic configuration file for the asset identifier based on the prompt template set and intent classification associated with each prompt template; receiving, by the one or more processors and from the large language model, the controller logic configuration file; and initiating, by the one or more processors, performance of one or more prediction-based actions based on the controller logic configuration file.

In some embodiments, the example computer-implemented method further comprise determining, using the large language model, the intent classification for a prompt template, wherein the intent classification is one of a search task or a reasoning task.

In some embodiments, the example computer-implemented method further comprises in response to determining that the intent classification is a search task, generating, using the large language model, a search query based on the prompt template; and retrieving, from a repository and based on the search query, relevant data associated with the asset identifier, wherein the repository comprises design metadata for an asset associated with the asset identifier.

In some embodiments, the example computer-implemented method of claim 2, further comprises in response to determining that the intent classification is a reasoning task, generating, by the large language model, an output corresponding to the prompt template by performing one or more logical reasoning tasks based on the one or more instruction sets in the prompt template.

In some embodiments, the controller logic generation workflow defines a sequence of operations for generating the controller logic configuration file, wherein the one or more instruction sets in each prompt template corresponds to a particular controller operation in the sequence of operations.

In some embodiments, the prompt template set comprises a plurality of sequential prompt templates corresponding to the sequence of operations defined by the controller logic generation workflow, wherein the large language model is configured to process each prompt template in a sequential order to generate an output for each prompt template.

In some embodiments, the controller logic configuration file is one of a PLC logic configuration file or DCS logic configuration file.

In some embodiments, the performance of the one or more prediction-based actions comprises applying the controller logic configuration file to a controller associated with an asset associated with the asset identifier.

In some embodiments, the indication of the controller logic generation request comprises one or more design metadata files associated with the asset identifier and having disparate formats, and the computer-implemented method further comprises translating the one or more design metadata files into a common format; and storing the one or more design metadata files in a repository.

In some embodiments, the example computer-implemented method further comprises fine-tuning the one or more transformer neural networks based on domain-specific controller operations data.

In accordance with another aspect of the present disclosure, an apparatus for generating controller logic is provided. The apparatus in some embodiments includes at least one processor and at least one non-transitory memory, the at least one non-transitory memory having computer-coded instructions stored thereon. The computer-coded instructions in execution with the at least one processor causes the apparatus to perform any of the example computer-implemented methods described herein. In some other embodiments, the apparatus includes means for performing each step of any of the computer-implemented methods described herein.

In accordance with another aspect of the present disclosure, a computer program product for generating controller logic is provided. The computer program product in some embodiments includes at least one non-transitory computer-readable storage medium having computer program code stored thereon. The computer program code in execution with at least one processor is configured for performing any one or the example computer-implemented methods described herein.

### BRIEF DESCRIPTION OF THE SEVERAL VIEWS OF THE DRAWINGS

Having thus described the embodiments of the disclosure in general terms, reference now will be made to the accompanying drawings, which are not necessarily drawn to scale, and wherein:
FIG. 1 illustrates a block diagram of an example system architecture within which at least some embodiments of the present disclosure may operate.
FIG. 2 illustrates a block diagram of an example apparatus in accordance with at least some embodiments of the present disclosure.
FIG. 3 illustrates a block diagram of an example client computing entity structured in accordance with at least some embodiments of the present disclosure.
FIG. 4 illustrates a data flow diagram showing example data structures and modules for generating controller logic in accordance with at least some embodiments of the present disclosure.
FIG. 5 illustrates an operational example of a controller logic generation workflow in accordance with at least one example embodiment of the present disclosure.
FIG. 6 illustrates a flowchart diagram of an example process for generating controller logic in accordance with at least some embodiments of the present disclosure.

### DETAILED DESCRIPTION

Various embodiments of the present disclosure now will be described more fully hereinafter with reference to the accompanying drawings, in which some, but not all, embodiments of the present disclosure are shown. Indeed, the present disclosure may be embodied in many different forms and should not be construed as limited to the embodiments set forth herein, rather, these embodiments are provided so that this disclosure will satisfy applicable legal requirements.

The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not indicate being based only on or based solely on the referenced element or elements unless so indicated. Like numbers refer to like elements throughout.

### OVERVIEW AND TECHNICAL IMPROVEMENTS

Various embodiments of the present disclosure are generally directed to systems, apparatuses, methods, and computer program products for generating controller logic for controllers using generative artificial intelligence. Example embodiments disclosed herein address technical challenges associated with generating controller logic for controllers including industrial embedded controllers such as PLCs, DCS controllers, and/or the like.

The process of generating controllers used across various industries and applications for process control, monitoring, and/or automation are cumbersome, consume substantial amount of resources, and are prone to errors. Embodiments of the present disclosure provide techniques for generating controller logic using generative artificial intelligence (Gen AI) that reduces or eliminates errors associated with conventional techniques for generating controller logic, reduces computing resources, reduces manpower, reduces cost, and improves overall efficiency. In particular, by reducing or eliminating errors associated with conventional techniques for generating controller logic, embodiments of the present disclosure obviate the need to regenerate controller logic and mitigates against failure of assets associated with the controllers due to inaccuracies in the controller logic as well as mitigates against safety issues associated with such failures.

Example embodiments, generate a prompt template set (e.g., a chain of prompt templates) based at least in part on domain expert knowledge and applies the prompt template set to a large language model comprising fine-tuned transformer neural network(s) to generate controller logic configuration files. Example embodiments fine-tune the large language model (e.g., transformer neural network(s) thereof) using domain-specific controller operations data. By applying prompt templates based on domain expert knowledge to such large language model, embodiments of the present disclosure improve the large language model (e.g., transformer neural network(s) thereof) such that the large language model generates accurate controller logic configuration files with less computing resources. In particular, by applying a prompt template set based at least in part on domain expert knowledge to guide the large language model for a task, embodiments of the present disclosure mitigates against hallucinations by the large language model.

In this regard, embodiments of the present disclosure provides improvement to various technologies and technical fields including machine learning/generative artificial technologies and the technical fields of controller logic generations and controllers generally.

### DEFINITIONS

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As used herein, the terms "data," "content," "digital content," "information," and similar terms may be used interchangeably to refer to data capable of being transmitted, received, and/or stored in accordance with embodiments of the present disclosure. Further, where a computing entity is described herein to receive data from another computing entity, it will be appreciated that the data may be received directly from another computing entity or may be received indirectly via one or more intermediary computing entities, such as, for example, one or more servers, relays, routers, network access points, base stations, hosts, and/or the like, sometimes referred to herein as a "network." Similarly, where a computing entity is described herein to send data to another computing device, it will be appreciated that the data may be sent directly to another computing entity or may be sent indirectly via one or more intermediary computing devices, such as, for example, one or more servers, relays, routers, network access points, base stations, hosts, and/or the like.

The term "computer-readable storage medium" refers to a non-transitory, physical or tangible storage medium (e.g., volatile or non-volatile memory), which may be differentiated from a "computer-readable transmission medium," which refers to an electromagnetic signal. Such a medium can take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical, infrared waves, or the like. Signals include man-made, or naturally occurring, transient variations in amplitude, frequency, phase, polarization or other physical properties transmitted through the transmission media. Examples of non-transitory computer-readable media include a magnetic computer readable medium (e.g., a floppy disk, hard disk, magnetic tape, any other magnetic medium), an optical computer readable medium (e.g., a compact disc read only memory (CD-ROM), a digital versatile disc (DVD), a Blu-Ray disc, or the like), a random access memory (RAM), a programmable read only memory (PROM), an erasable programmable read only memory (EPROM), a FLASH-EPROM, or any other non-transitory medium from which a computer can read. The term computer-readable storage medium is used herein to refer to any computer-readable medium except transmission media. However, it will be appreciated that where embodiments are described to use a computer-readable storage medium, other types of computer-readable mediums can be substituted for or used in addition to the computer-readable storage medium in alternative embodiments.

The terms "input," "indication," "indication input," "interaction," "interaction input," or the like refer to an identifiable, non-transitory occurrence that has technical significance for system hardware and/or software. In some embodiments, an interaction input may be user-generated via at least a user interface associated with a computing device, such as keystrokes, mouse movements, voice commands, and/or the like. In some embodiments, an interaction input may be application-generated (i.e., automatically and/or dynamically internally generated by an application via at least computing circuitry), such as program loading, compiling a data object, errors, and/or the like. For example, an application function may be caused by, and/or a data object may be generated in response to, a user interface interaction input and/or an internal confirmation interaction input generated by the application or associated computing device(s).

The terms "machine learning module," "machine learning model," "ML module(s)," or "ML model(s)" refer to a machine learning or deep learning task or mechanism. The term "machine learning" refers to a method used to devise complex models and algorithms that lend themselves to prediction. A machine learning model is a computer-implemented algorithm that may learn from data with or without relying on rules-based programming. These models enable reliable, repeatable decisions and results and uncovering of hidden insights through machine-based learning from historical relationships and trends in the data. In some embodiments, the machine learning model is a clustering model, a regression model, a neural network, a random forest, a decision tree model, a classification model, a large language model as defined above, or the like.

A machine learning model may be initially fit or trained on a training dataset (e.g., a set of examples used to fit the parameters of the model). The model may be trained on the training dataset using supervised or unsupervised learning. The model may be run with the training dataset and produce a result, which is then compared with a target, for each input vector in the training dataset. Based on the result of the comparison and the specific learning algorithm being used, the parameters of the model may be adjusted.

The machine learning models as described herein may make use of multiple ML engines (e.g., for analysis, transformation, and other needs). The system may train different ML models for different needs and different ML-based engines. The system may generate new models (based on the gathered training data) and may evaluate their performance against the existing models. Training data may include any of the gathered information, as well as information on actions performed based on the various recommendations.

The ML models may be any suitable model for the task or activity implemented by each ML-based engine. Machine learning models may be some form of neural network. The underlying ML models may be learning models (supervised or unsupervised). As examples, such algorithms may be prediction (e.g., linear regression) algorithms, classification (e.g., decision trees) algorithms, time-series forecasting (e.g., regression-based) algorithms, association algorithms, clustering algorithms (e.g., K-means clustering, Gaussian mixture models, DBscan), or Bayesian methods (e.g., Naive Bayes, Bayesian model averaging, Bayesian adaptive trials), image to image models (e.g., FCN, PSPNet, U-Net) sequence to sequence models (e.g., RNNs, LSTMs, BERT, Autoencoders) or Generative models (e.g., GANs).

The ML models may implement statistical algorithms, such as dimensionality reduction, hypothesis testing, one-way analysis of variance (ANOVA) testing, principal component analysis, conjoint analysis, neural networks, support vector machines, decision trees (including random forest methods), ensemble methods, and other techniques. Other ML models may be generative models (such as Generative Adversarial Networks or autoencoders, generative pre-trained transformer (GPT) model, or the like).

In various embodiments, the ML models may undergo a training or learning phase before they are released into a production or runtime phase or may begin operation with models from existing systems or models. During a training or learning phase, the ML models may be tuned to focus on specific variables, to reduce error margins, or to otherwise optimize their performance. The ML models may initially receive input from a wide variety of data, such as the gathered data described herein. The ML models herein may undergo a second or multiple subsequent training phases for retraining the models.

### EXAMPLE SYSTEMS AND APPARATUSES OF THE DISCLOSURE

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

A non-volatile computer-readable storage medium may include a floppy disk, flexible disk, hard disk, solid-state storage (SSS) (e.g., a solid-state drive (SSD), solid-state card (SSC), solid-state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

A volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

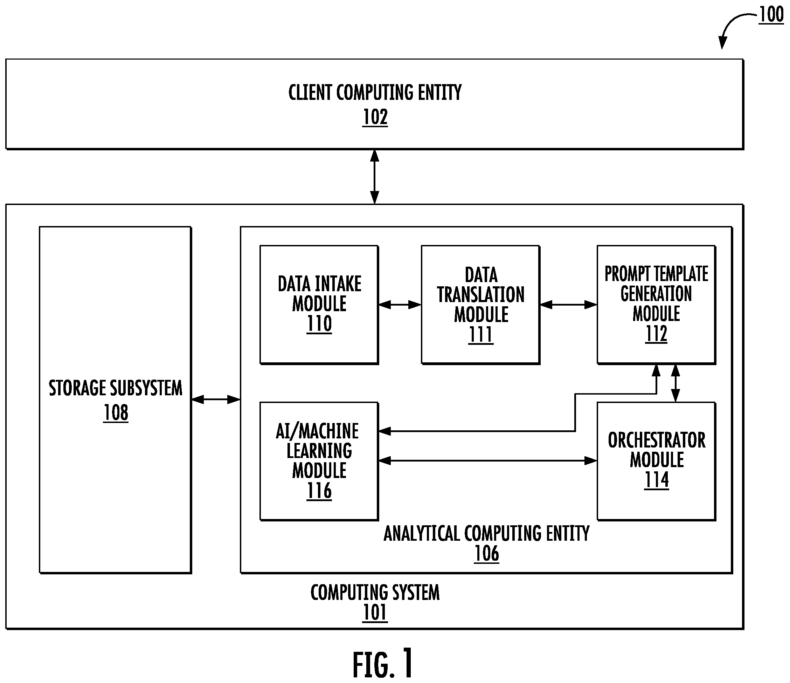

In this regard, FIG. 1 provides an example overview of a system architecture 100 in accordance with at least some example embodiments of the present disclosure. The depiction of the example architecture 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1 and the architecture 100 disclosed therein is merely presented to provide an example basis and context for the facilitation of some of the features, aspects, and uses of the methods, apparatuses, computer readable media, and computer program products disclosed and contemplated herein. It will be understood that while many of the aspects and components presented in FIG.1 are shown as discrete, separate elements, other configurations may be used in connection with the methods, apparatuses, computer readable media, and computer programs described herein, including configurations that combine, omit, separate, and/or add aspects and/or components. The example system architecture 100 may be used in a plurality of domains and not limited to any specific application as disclosed herewith. In particular, while some example embodiments are described herein with reference to industrial plant domain, the example system architecture 100 may be used in a plurality of domains and limited to any specific application as disclosed herein. The plurality of domains may include healthcare, manufacturing, to name a few.

As illustrated, the system architecture 100 includes a computing system 101 configured to receive indication of requests, such as controller logic generation requests, from client computing entities 102, process the requests to generate predictive outputs, such as controller logic configuration file, and provide the predictive outputs to the client computing entities 102. In some embodiments, the computing system 101 may communicate with at least on client computing entity 102 using one or more communications networks.

The one or more communications networks may be embodied in any of a myriad of network configurations. In some embodiments, the one or more communications networks embodies a public network (e.g., the Internet). In some embodiments, the one or more communications network embodies a private network (e.g., an internal localized, or closed-off network between particular devices). In some other embodiments, the one or more communications network embodies a hybrid network (e.g., a network enabling internal communications between particular connected devices and external communications with other devices). The one or more communications networks in some embodiments includes one or more base station(s), relay(s), router(s), switch(es), cell tower(s), communications cable(s) and/or associated routing station(s), and/or the like. In some embodiments, the one or more communications network includes one or more user-controlled computing device(s) (e.g., a user owned router and/or modem) and/or one or more external utility devices (e.g., Internet service provider communication tower(s) and/or other device(s)).

In some embodiments, each of the components of the system architecture 100 may be communicatively coupled to transmit data to and/or receive data from one another over the same or different wireless and/or wired networks embodying one or more communications networks. Such configuration(s) may include, without limitation, a wired or wireless Personal Area Network (PAN), Local Area Network (LAN), Metropolitan Area Network (MAN), Wide Area Network (WAN), and/or the like.

Additionally, while FIG. 1 illustrate certain system entities as separate, standalone entities communicating over a communications network, the various embodiments are not limited to this architecture. In other embodiments, one or more computing entities share one or more components, hardware, and/or the like, or otherwise are embodied by a single computing device such that connection(s) between the computing entities over a communications network are altered and/or rendered unnecessary. For example, in some embodiments, a client computing entity 102 may include some or all of the computing system 101, such that an external communications network is not required.

The computing system 101 may include an analytical computing entity 106. The analytical computing entity 106 may be configured to receive requests such as controller logic requests, from client computing entities 102, process the requests to generate predictive outputs (e.g., comprising controller logic configuration file such as PLC logic configuration file, DCS logic configuration file, and/or the like), and provide the predictive outputs to the client computing entities 102.

As illustrated, the computing system 101 may further include a storage subsystem 108 may be configured to store input data, training data, and/or the like that may be used by the analytical computing entity 106 to perform data analysis and/or training operations of the present disclosure. In addition, the storage subsystem 108 may be configured to store model definition data used by the analytical computing entity 106 to perform various data analysis and/or training tasks. In some embodiments, the storage subsystem 108 may include one or more storage units, such as multiple distributed storage units that are connected through a computer network. In some embodiments, each storage unit may include one or more non-volatile storage or memory media including, but not limited to, hard disks, ROM, PROM, EPROM, EEPROM, flash memory, MMCS, SD memory cards, Memory Sticks, CBRAM, PRAM, FeRAM, NVRAM, MRAM, RRAM, SONOS, FJG, RAM, Millipede memory, racetrack memory, and/or the like.

In some embodiments, the analytical computing entity 106 may be specially configured to perform one or more steps/operations of one more techniques described herein. For example, the analytical computing entity 106 may train, implement, use, and/or update generative artificial intelligence/machine learning models in accordance with one or more steps/operations of the present disclosure. In some embodiments, the analytical computing entity 106 may be configured to receive a trained generative artificial intelligence/machine learning model from one or more external computing entities.

The analytical computing entity 106 may include one or more modules. Each of the one or more modules may be any means such as a device or circuitry embodied in either hardware, software, or a combination of hardware and software configured to facilitate and/or perform one or more functionalities associated with generating controller logic for a controller (e.g., PLC, DCS controllers, and/or the like).

The analytical computing entity 106 may include a data intake module 110. The data intake module 110 may be configured to capture, receive, request, and/or otherwise gather data associated with one or more controllers (e.g., PLC, DCS, and/or the like), assets (e.g., equipment, machines, and/or the like), and/or plants (e.g., industrial plants, warehouses, and/or the like). In some embodiments, the data intake module 110 is configured to receive model/drawing representations for an asset (or portions of an asset), design metadata extracted from model/drawing representations for an asset, and/or other data that may be leveraged to generate controller logic for a controller configured to control and/or monitor the asset. The model/drawing representations for an asset may comprise computer-aided design (CAD) models and/or drawings and may be associated with different formats. In some embodiments, the asset may be associated with a plant. Additionally or alternatively, in some embodiments, the data intake module 110 may be configured to retrieve model/drawing representations for an asset (or portion of an asset), design metadata extracted from model/drawing representations for an asset, and/or other relevant data from one or more data repository/repositories accessible to the computing system 101 and/or the analytical computing entity 106.

In some embodiments, the data intake module 110 may be configured to extract design metadata from model/drawing representations for an asset. For example, the data intake module 110 may extract design metadata files from model/drawing represents for an asset, wherein such design metadata files comprise design metadata associated with the asset. Desing metadata may comprise data about the asset such as mechanical data associated with asset, electrical data associated with the asset, and/or the like. The data intake module 110 may support such operations for any number of assets, controllers, and/or plants.

Design metadata files (e.g., comprising design metadata) associated with an asset may be extracted from a plurality of model/drawing representations associated with the asset and may comprise disparate formats (e.g., JSON, XML, CSV, and/or the like). For example, a first design metadata file may be in a JSON format. As another example, a second design metadata file may be in an XML format. As yet another example, a third design metadata file may be in a CVS format.

The analytical computing entity 106 may include a data translation module 111. The data translation module 111 may be configured to translate design metadata files extracted from model/drawing representations of assets into a common data schema (e.g., a common format). For example, the data translation module 111 may be configured to convert each design metadata document into a single common format. The data translation module 111 may store the translated metadata in a repository such as a data schema storage repository. The computing system 101 may comprise the data schema storage repository. In some embodiments, the storage subsystem 108 and/or the analytical computing entity 106 may comprise the data schema storage repository. In some embodiments, the data schema storage repository may be external to the storage subsystem 108, the analytical computing entity 106, and/or the computing system 101.

The analytical computing entity 106 may include a prompt template generation module 112. The prompt template generation module may be configured to generate a prompt template set comprising instructions, data, rules, and/or the like configured for guiding a large language model for a particular task associated with generating controller logic configuration file. The prompt template generation module 112 may be configured to generate at least a portion of the prompt template set based on domain expert knowledge and/or one or more rules associated with generating controller logic.

The analytical computing entity 106 may include an orchestrator module 114. The orchestrator module 114 may be configured to orchestrate or otherwise facilitate various functionalities associated with generating controller logic configuration files (e.g., comprising controller logic) as described herein, including receiving and/or transmitting, one or more datasets, objects, instructions, and/or the like from and/or to one or more other modules associated with the analytical computing entity 106 and/or to external system(s). In some embodiments, the orchestrator module 114 may be configured to provide a prompt template set as input to a large language model. Alternatively or additionally, the orchestrator module 114 may be configured to receive output(s) from the large language model.

The analytical computing entity 106 may include an AI/machine learning module 116. The AI/machine learning module 116 may be configured to request, receive, process, generate, and transmit data, data structures, control signals, and electronic information for training and executing a trained AI and/or machine learning model configured to facilitate the operations and/or functionalities described herein. For example, in some embodiments the AI/machine learning module 116 may be configured to identify training data and/or utilize such training data for training a particular machine learning model, AI, and/or other model to generate particular output data based at least in part on learnings from the training data. Additionally or alternatively, in some embodiments, the AI/machine learning module 116 may embody a trained machine learning model, AI and/or other specially configured model utilized to process inputted data (e.g., prompt templates) and/or configured to retrieve a trained machine learning model, AI and/or other specially configured model utilized to process inputted data.

In some embodiments, the AI/machine learning module 116 includes at least one large language model. In some embodiments, the large language model may comprise one or more transformer neural networks. In some embodiments, the AI/machine learning module 116 may be configured to fine-tune the large language model (e.g., transformer neural network(s) thereof) based on controller operations data. Additionally or alternatively, in some embodiments, the AI/machine learning module 116 may be configured to process received data utilizing one or more algorithm(s), function(s), subroutine(s), and/or the like, in one or more pre-processing and/or subsequent operations that need not utilize a machine learning or AI model.

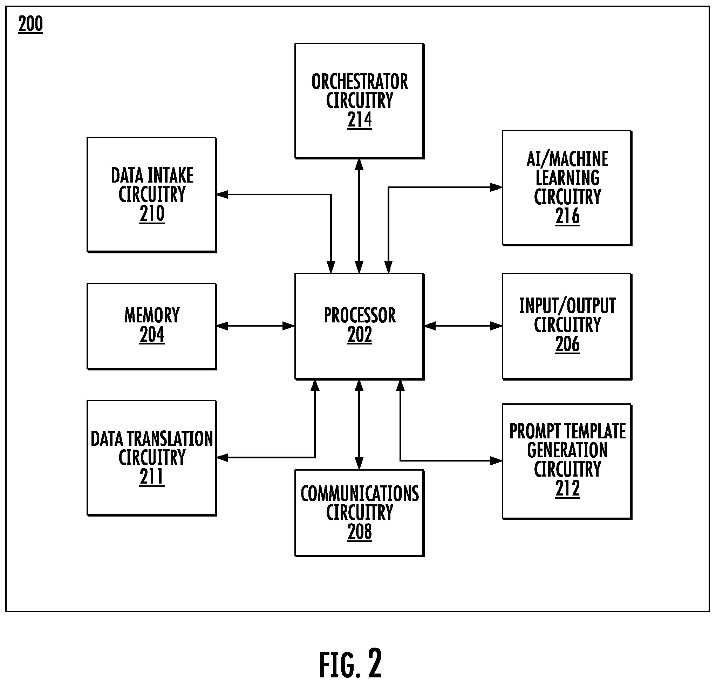

FIG. 2 illustrates a block diagram of an example apparatus that may be specially configured in accordance with at least one example embodiment of the present disclosure. Specifically, FIG. 2 depicts an example controller logic generation apparatus 200 ("apparatus 200") specially configured in accordance with at least some example embodiments of the present disclosure. For example, in some embodiments, the computing system 101 and/or a portion thereof if embodied by a particular embodiment, may be embodied by one or more apparatuses 200 depicted and described in FIG. 2.

It should be noted, however, that the components, or elements illustrated in and described with respect to FIG. 2 below may not be mandatory and thus one or more may be omitted in certain embodiments. Additionally, some embodiments, may include further or different components or elements beyond those illustrated in and described with respect to FIG. 2. In some embodiments, the functionality of the computing system 101 or any subset thereof may be performed by a single apparatus 200 or multiple apparatuses 200. In some embodiments, the apparatus 200 may comprise one or a plurality of physical devices.

The apparatus 200 includes processor 202, memory 204, input/output circuitry 206, communications circuitry 208, data intake circuitry 210, data translation circuitry 211, prompt template generation circuitry 212, orchestrator circuitry 214, and/or AI/Machine learning circuitry 216. In some embodiments, the apparatus 200 is configured, using one or more of the sets of circuitry embodied by processor 202, memory 204, input/output circuitry 206, communications circuitry 208, data intake circuitry 210, data translation circuitry 211, prompt template generation circuitry 212, orchestrator circuitry 214, and/or AI/Machine learning circuitry 216., to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed. As one particular example embodiment, the processor 202 is configured to perform various operations associated with generating controller logic configuration files comprising controller logic for a controller.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s) , and/or other external computing device in communication with the apparatus 200.

In some embodiments, the apparatus 200 includes a data intake circuitry 210. The data intake circuitry 210 may include hardware, software, firmware, and/or a combination thereof, that supports generating controller logic. For example, in some embodiments, the data intake circuitry 210 includes hardware, software, firmware, and/or a combination thereof, configured to, with the processing circuitry 202, input/output circuitry 206 and/or communications circuitry 208, perform one or more functions associated with the data intake module 110 described above with respect to FIG. 1. In some embodiments, the data intake circuitry 210 includes a separate processor, specially configured field programmable gate array (FPGA), or a specially programmed application specific integrated circuit (ASIC).

In some embodiments, the apparatus 200 includes a data translation circuitry 211. The data translation circuitry 211 may include hardware, software, firmware, and/or a combination thereof, that supports generating controller logic. For example, in some embodiments, the data translation circuitry 211 includes hardware, software, firmware, and/or a combination thereof, configured to, with the processing circuitry 202, input/output circuitry 206 and/or communications circuitry 208, perform one or more functions associated with the data translation module 111 described above with respect to FIG. 1. In some embodiments, the data intake circuitry 210 includes a separate processor, specially configured field programmable gate array (FPGA), or a specially programmed application specific integrated circuit (ASIC).

In some embodiments, the apparatus 200 includes a prompt template generation circuitry 212. The prompt template generation circuitry 212 may include hardware, software, firmware, and/or a combination thereof, that supports generating controller logic. For example, in some embodiments, the prompt template generation circuitry 212 includes hardware, software, firmware, and/or a combination thereof, configured to, with the processing circuitry 202, input/output circuitry 206 and/or communications circuitry 208, perform one or more functions associated with the prompt template generation module 112 described above with respect to FIG. 1. In some embodiments, the prompt template generation circuitry 212 includes a separate processor, specially configured field programmable gate array (FPGA), or a specially programmed application specific integrated circuit (ASIC).

In some embodiments, the apparatus 200 includes an orchestrator circuitry 214. The orchestrator circuitry 214 may include hardware, software, firmware, and/or a combination thereof, that supports generating controller logic. For example, in some embodiments, the orchestrator circuitry 214 includes hardware, software, firmware, and/or a combination thereof, configured to, with the processing circuitry 202, input/output circuitry 206 and/or communications circuitry 208, perform one or more functions associated with the orchestrator module 114 described above with respect to FIG. 1. In some embodiments, the orchestrator circuitry 214 includes a separate processor, specially configured field programmable gate array (FPGA), or a specially programmed application specific integrated circuit (ASIC).

In some embodiments, the apparatus 200 includes an AI/machine learning circuitry 216. The AI/machine learning circuitry 216 may include hardware, software, firmware, and/or a combination thereof, that supports generating controller logic. For example, in some embodiments, the AI/machine learning circuitry 216 includes hardware, software, firmware, and/or a combination thereof, configured to, with the processing circuitry 202, input/output circuitry 206 and/or communications circuitry 208, perform one or more functions associated with the AI/machine learning module 116 described above with respect to FIG. 1. In some embodiments, the AI/machine learning circuitry 216 includes a separate processor, specially configured field programmable gate array (FPGA), or a specially programmed application specific integrated circuit (ASIC).

Alternatively or additionally or in some embodiments, one or more of the sets of circuitries embodying processor 202, memory 204, input/output circuitry 206, communications circuitry 208, data intake circuitry 210, data translation circuitry 211, prompt template generation circuitry 212, orchestrator circuitry 214, and/or AI/Machine learning circuitry 216.may perform some or all of the functionality described as associated with another component. For example, in some embodiments, two or more of the sets of circuitry embodied by processor 202, memory 204, input/output circuitry 206, communications circuitry 208, data intake circuitry 210, data translation circuitry 211, prompt template generation circuitry 212, orchestrator circuitry 214, and/or AI/Machine learning circuitry 216, are combined into a single module embodied in hardware, software, firmware, and/or a combination thereof. Similarly, in some embodiments, one or more of the sets of circuitry, for example data intake circuitry 210, data translation circuitry 211, prompt template generation circuitry 212, orchestrator circuitry 214, and/or AI/Machine learning circuitry 216, is/are combined with the processor 202, such that the processor 202 performs one or more of the operations described above with respect to each of these sets of circuitry embodied by the data intake circuitry 210, data translation circuitry 211, prompt template generation circuitry 212, orchestrator circuitry 214, and/or AI/Machine learning circuitry 216.

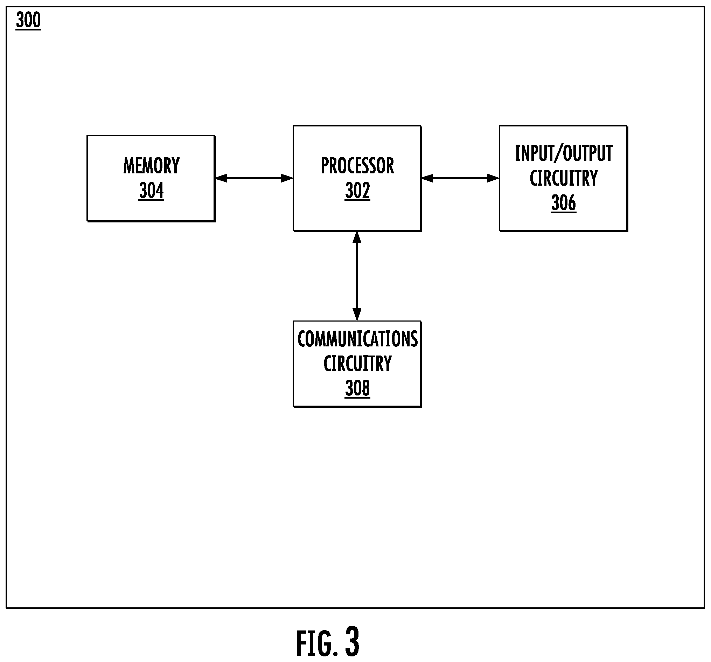

FIG. 3 illustrates a block diagram of an example client computing entity structured in accordance with at least some embodiments of the present disclosure. A client computing entity may be embodied by one or more computing systems, such as apparatus 300 shown in FIG. 3. The apparatus 300 may include processor 302, memory 304, input/output circuitry 306, and a communications circuitry 308. Although these components 302-308 are described with respect to functional limitations, it should be understood that the particular implementations necessarily include the use of particular hardware. It should also be understood that certain of these components 302-308 may include similar or common hardware. For example, two sets of circuitries may both leverage use of the same processor, network interface, storage medium, or the like to perform their associated functions, such that duplicate hardware is not required for each set of circuitries.

In some embodiments, the processor 302 (and/or co-processor or any other processing circuitry assisting or otherwise associated with the processor) may be in communication with the memory 304 via a bus for passing information among components of the apparatus. The memory 304 is non-transitory and may include, for example, one or more volatile and/or non-volatile memories. In other words, for example, the memory 304 may be an electronic storage device (e.g., a computer-readable storage medium). The memory 304 may include one or more databases. Furthermore, the memory 304 may be configured to store information, data, content, applications, instructions, or the like for enabling the apparatus 300 to carry out various functions in accordance with example embodiments of the present invention.

The processor 302 may be embodied in a number of different ways and may, for example, include one or more processing devices configured to perform independently. In some preferred and non-limiting embodiments, the processor 302 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In some preferred and non-limiting embodiments, the processor 302 may be configured to execute instructions stored in the memory 304 or otherwise accessible to the processor 302. In some preferred and non-limiting embodiments, the processor 302 may be configured to execute hard-coded functionalities. As such, whether configured by hardware or software methods, or by a combination thereof, the processor 302 may represent an entity (e.g., physically embodied in circuitry) capable of performing operations according to an embodiment of the present invention while configured accordingly. Alternatively, as another example, when the processor 302 is embodied as an executor of software instructions (e.g., computer program instructions), the instructions may specifically configure the processor 302 to perform the algorithms and/or operations described herein when the instructions are executed.

In some embodiments, the apparatus 300 may include input/output circuitry 306 that may, in turn, be in communication with processor 302 to provide output to the user and, in some embodiments, to receive an indication of a user input. The input/output circuitry 306 may comprise a user interface and may include a display, and may comprise a web user interface, a mobile application, a query-initiating computing device, a kiosk, or the like.

In embodiments in which the apparatus 300 is embodied by a limited interaction device, the input/output circuitry 306 includes a touch screen and does not include, or at least does not operatively engage (i.e., when configured in a tablet mode), other input accessories such as tactile keyboards, track pads, mice, etc. In other embodiments in which the apparatus is embodied by a non-limited interaction device, the input/output circuitry 306 may include at least one of a tactile keyboard (e.g., also referred to herein as keypad), a mouse, a joystick, a touch screen, touch areas, soft keys, and other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 304, and/or the like).

The communications circuitry 308 may be any means such as a device or circuitry embodied in either hardware or a combination of hardware and software that is configured to receive and/or transmit data from/to a network and/or any other device, circuitry, or module in communication with the apparatus 300. In this regard, the communications circuitry 308 may include, for example, a network interface for enabling communications with a wired or wireless communication network. For example, the communications circuitry 308 may include one or more network interface cards, antennae, buses, switches, routers, modems, and supporting hardware and/or software, or any other device suitable for enabling communications via a network. Additionally, or alternatively, the communications circuitry 308 may include the circuitry for interacting with the antenna/antennae to cause transmission of signals via the antenna/antennae or to handle receipt of signals received via the antenna/antennae.

It is also noted that all or some of the information discussed herein can be based on data that is received, generated and/or maintained by one or more components of apparatus 300. In some embodiments, one or more external systems (such as a remote cloud computing and/or data storage system) may also be leveraged to provide at least some of the functionality discussed herein.

### EXAMPLE SYSTEM OPERATIONS

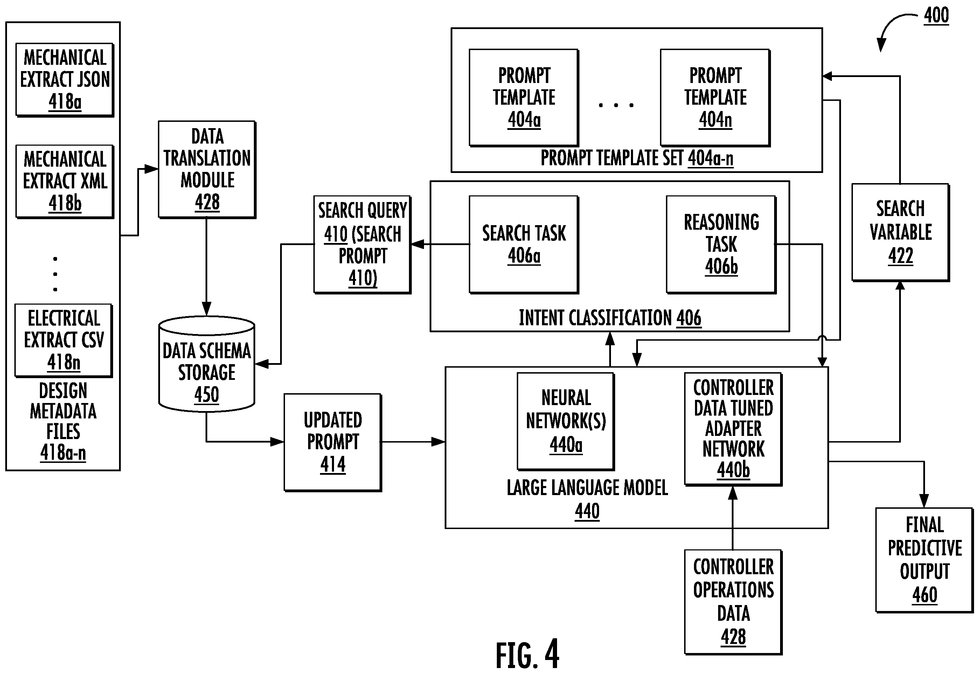

FIG. 4 illustrates a data flow diagram 400 showing example data structures and modules for generating controller logic using generative artificial intelligence in accordance with at least some embodiments of the present disclosure.

In some embodiments, indication of a controller logic generation request associated with an asset identifier may be received. In some embodiments, the asset identifier may be associated with an asset. The asset identifier, for example, may comprise one or more items or elements by which the asset may be uniquely identified from other assets. Alternatively or additionally, in some embodiments, the asset identifier may comprise one or more items or elements by which the asset type associated with the asset may be uniquely identified from other asset types. In some embodiments the asset identifier may be in the form of text string(s), numerical character(s), alphabetical character(s), alphanumeric code(s), American Standard Code for information Interchange (ASCII) characters(s), and/or the like.

In some embodiments, an asset may be a machine, a tank, a pipe, an electric device, equipment, or any other physical structure or object within or associated with a processing plant that is utilized in or in support of a process performed by the processing plant.

In some embodiments, a processing plant, industrial plant, plant, and/or similar terms used herein interchangeably may refer to one or more buildings, complex, or arrangement of components that perform operation(s)/processes (e.g., a chemical, physical, electrical, mechanical process, and/or the like) for converting input materials into one or more output products. Non-limiting examples of a processing plant include a chemical industrial plant, automotive manufacturing plant, distillery, oil refinery, fabric manufacturing plant, and/or the like.

The controller logic generation request may describe signal, data, message (e.g., an inter-service message, intra-service message, network message, etc.), and/or computer readable instructions descriptive of a request to generate controller logic configuration file (e.g., comprising controller logic) for a controller configured to control and/or monitor the asset. Non-limiting examples of an asset include, but is not limited to, conveyor systems, processing equipment, packaging machines, lifts, and/or the like.

In some embodiments, the controller logic generation request may be associated with and/or comprise one or more design metadata files 418a-n associated with and/or extracted from one or more model/drawing representations for the asset (or portion thereof). The one or more design metadata files 418a-n may comprise input data and/or variables associated with the asset which may be used to generate controller logic. Examples of such model/drawing representations include, but are not limited to, computer-aided design (CAD) model(s)/drawings(s) and other modeling/drawing software programs configured for creating two-dimensional and/or three-dimensional designs. In some embodiments, one or more data extraction models may be leveraged to extract the one or more design metadata files 418a-n from the one or more model/drawing representations. Such data extraction models may comprise rules-based models and/or machine-learning based models.

In some embodiments, the one or more design metadata files 418a-n comprise mechanical metadata files, electrical metadata files, and/or the like. The mechanical metadata files, for example, may be extracted from AutoCAD mechanical drawings. The electrical metadata files, for example, may be extracted from AutoCAD electrical drawings. In some embodiments, the one or more design metadata files 418a-n are stored in a data schema storage repository 450 configured to store data that supports generating controller logic configuration files. The data schema storage repository 450 may be configured to store design metadata files associated with one or more assets, which design metadata files may be extracted from corresponding model/drawing representations of the respective assets.

In some embodiments, the respective design metadata files (e.g., 418a, 418b, 418n) from the one or more design metadata files 418a-n may be associated with disparate formats (e.g., JSON, XML, CSV, and/or the like). In some embodiments, one or more data translation operations are performed on the one or more design metadata files 418a-n before storing the one or more design metadata files 418a-n in the data schema storage repository 450. The one or more design metadata files 418a-n may be processed such that each design metadata file from the one or more design metadata files 418a-n is associated with a common data schema. For example, at least a portion of the design metadata files 418a-n may be translated to a common predefined format before storing the respective design metadata file in the data schema storage repository 450.

In some embodiments, a prompt template set 404a-n associated with a controller logic generation workflow is identified. A prompt template set may comprise one or more prompts. In some embodiments, the controller logic generation workflow is domain-specific. For example, the prompt template set 404a-n may be associated with a domain-specific controller logic generation workflow. For example, in some embodiments, the controller logic generation workflow may be associated with a particular industrial plant.

In some embodiments, a controller logic generation workflow is a data entity that describes and/or comprise steps/operations for generating controller logic (e.g., program) for operating a controller such as a PLC, a DCS controller, and/or the like. In some embodiments, the steps/operations define a sequence of step/operations. For example, the controller logic generation workflow defines and/or comprises a sequence of steps/operations for generating a controller logic configuration file (e.g., comprising controller logic). Additionally, in some embodiments, steps/operations may include instructions, rules, logical reasoning, input data, search variables, and/or other relevant data leveraged to generate controller logic configuration file. In some embodiments, at least a portion of the controller logic generation workflow may be generated based on domain expert knowledge. In a particular embodiment, at least a portion of the controller logic generation workflow may reflect domain expert knowledge and/or reasoning.

A controller logic configuration file may comprise controller logic. Such controller logic configuration file may be generated, developed, written, implemented, and/or the like using any of a variety of programming languages. A given programming language may define data (e.g., graphical data, textual data, and/or the like), symbols, rules, and/or the like leveraged to generate controller logic for a controller. Examples of controller logic include, but not limited to, ladder logic, "C" logic, and/or the like.

In an example embodiment, the controller logic generation workflow is a PLC logic generation framework configured for generating controller logic for a PLC based at least in part on context, such as asset type or the like. In another example embodiment, the controller logic generation workflow is a DCS controller logic generation workflow for generating controller logic for a DCS controller based at least in part on context, such as asset type or the like. It would be appreciated that the controller logic generation workflow may be configured for generating controller logic for other controllers.

In some embodiments, a prompt template is a data entity that describes a predefined structure for a generative model prompt. The prompt template may include or otherwise define one or more prompts that comprise one or more instruction sets for guiding a large language model for a particular task. A prompt template, for example, may include one or more instruction sets for guiding a large language model to perform one or more tasks associated with generating controller logic configuration file for an asset. Examples of such tasks include search tasks, reasoning tasks, classification tasks, and/or the like. In some examples, a prompt template may include a no-shot prompt template, a few-shot prompt template, and/or the like.

In some embodiments, the prompt template set 404a-n may comprise one or more prompt templates. In some embodiments, the prompt template set 404a-n may comprise a plurality of sequential prompt templates 404a-n, where each prompt template corresponds to a particular step/operation (or a portion of a step operation) in the sequence (e.g., chain) of operations defined by the controller logic generation workflow (described above). In this regard, in some embodiments, the prompt template set 404a-n may comprise a plurality of sequential prompt templates corresponding to the sequence of operations defined by the controller logic generation workflow. Each prompt template of the prompt template set 404an, for example, may be associated with a sequence position identifier (e.g., sequence number, order number, or the like).

In some embodiments, the prompt template set 404a-n is provided as input to the large language model 440. In some embodiments, the large language model 440 is configured to process each prompt template sequentially (e.g., in accordance with the sequence defined by the prompt template set 404a-n). In some embodiments, the prompt template set 404a-n is provided as a single input to the large language model 440. In some embodiments, the prompt template set 404a-n is provided as input to the large language model 440 in a sequential manner. In some embodiments, subset(s) of the prompt templates 404a-n is provided to the large language model 440 one at a time in a sequential manner. In some embodiments, each prompt template from the prompt template set 404a-n is provided to the large language model 440 one at a time in a sequential manner. For example, a prompt template may be input into the large language model 440 based on a sequence position identifier associated with the respective prompt template.

In some embodiments, the prompt template set 404a-n are input to the large language model 440 using an orchestrator agent. The orchestrator agent, for example, may be connected to the large language model 440. The orchestrator agent may include hardware, software, firmware, and/or a combination thereof, that supports generating controller logic. In particular, the orchestrator agent may include hardware, software, firmware, and/or a combination thereof communicatively coupled to the large language model 440. In some embodiments, the orchestrator agent may comprise or otherwise embodied by the orchestrator module 114 described above with respect to FIG. 1. The orchestrator agent may be configured to provide a prompt template to the large language model 440 and receive a corresponding output for the prompt template from the large language model 440 based on the one or more instruction sets in the prompt template.

In some embodiments, the corresponding output for a particular prompt template may be input to the next prompt template in the sequence and/or input to one or more other subsequent prompt templates in the prompt template set 404a-n. The output for a particular prompt template, for example, may be at least a portion of the input data (e.g., input variable or the like) for executing the one or more instruction sets (or portion thereof) in the next prompt template and/or other subsequent prompt templates. Alternatively or additionally, in certain example embodiments, where the prompt templates in the prompt template set 404an are provided in subsets or individually to the large language model, a next prompt template and/or other subsequent templates in the sequence of prompt templates 404a-n may be augmented with the output of the previous prompt template before providing such next prompt template and/or other subsequent prompt templates to the large language model 440.

In some embodiments, the large language model 440 is a data entity that describes parameters, hyper-parameters, and/or defined operations of a rules-based and/or machine learning model (e.g., model including at least one of one or more rule-based layers, one or more layers that depend on trained parameters, coefficients, and/or the like). A large language model may include any type of model configured, trained, and/or the like to generate a predictive output. In some embodiments, the predictive output is a model output generated by the large language model for an input data object (e.g., a controller logic request and/or design metadata for an asset). The predictive output, for example, may comprise controller logic configuration file (e.g., comprising controller logic such as PLC logic, DCS controller logic, and/or the like) for a controller configured to control and/or monitor the asset associated with the controller logic generation request.

The large language model 440 may be configured, trained, and/or the like to generate a predictive output based on the prompt template set 404a-n. The large language model 440, for example, may be configured to perform, execute, or the like the one or more instruction sets in a prompt template 404a-n. For example, the large language model 440 may be configured to perform, execute, or the like the one or more instruction sets in at least a subset of the prompt template 404a-n sequentially to generate an output for each prompt template and generate the predictive output based on the output associated with the prompt templates. In some embodiments, the one or more instructions for a given prompt template may be configured to guide the large language model 440 for a search task or reasoning task. In some embodiments, the large language model 440 may be configured to determine the intent associated with a given prompt template. The intent associated with a prompt template, for example, may describe the type of task to be performed. For example, the large language model 440 may be configured to determine whether the intent associated with a prompt template is a search task, reasoning task, and/or the like. In some embodiments, the large language model 440 may include one or more intent classifier algorithms configured for generating the intent classifications. In some other example embodiments, a separate machine learning model or rules-based model may be leveraged to generate the intent classification for a prompt template and provide the intent classification to the orchestrator agent and/or the large language model 440.

In some embodiments, the large language model 440 includes one or more neural networks. The large language model 440 (e.g., neural networks thereof) may be trained using one or more supervised and/or unsupervised machine learning techniques to generate an output for each prompt template and final predive output comprising controller logic file. The large language model may be trained using training data that include a plurality of past design metadata files, a plurality of past controller logic configuration files, and/or other relevant data.

In some embodiments, the one or more neural networks of the large language model 440 comprises one or more transformer neural networks. A transformer neural network may be configured at least in part for performing sequence-to-sequence tasks. For example, a transformer neural network may be configured to transform an input sequence to an output sequence. The transformer neural network may comprise an encoder and a decoder, each comprising one or more layers. The encoder may be configured to receive an input and output an encoded representation (e.g., matrix representation) of the input and the decoder may be configured to receive the encoded representation and generate an output. The encoder layers and/or the decoder layers may comprise a multi-head attention mechanism such as a self-attention mechanism. In some embodiments, the large language model may comprise other types of neural networks such as, for example, recurrent neural networks, convolutional neural networks, or the like.

In some embodiments, large language model 440 (e.g., one or more neural networks thereof) is fine-tuned with, or otherwise using, domain-specific data. Such domain-specific data may comprise controller operations data 428 (e.g., PLC operations data, DCS controller operations data, and/or the like). The controller operations data 428, for example, may be specific to a particular industrial plant. In some embodiments, the large language model 440 comprises one or more transformer neural networks 440a and one or more controller data tuned adapter networks 440b. By fine-tuning the large language model 440 with domain-specific data such as PLC operations data, DCS controller operations data, or the like, example embodiments improve the accuracy of the large language model 440 such that the large language model 440 generates optimal and accurate predictive output (e.g., optimal and accurate controller logic). In particular, by fine-tuning the large language model 440 with domain-specific data, example embodiments of the present disclosure mitigate against hallucination by the large language model 440, thus improving the accuracy and reliability of the large language model 440.

In some embodiments, an intent classification 406 is generated for a prompt template using the large language model 440. The large language model 440 may be configured, trained, and/or the like to generate an intent classification for a prompt template based on the one or more instruction sets in the respective prompt template. The intent classification for a given prompt template may describe the type of task to be performed by the large language model 440. In some embodiments, the intent classification is one of a search task 406a or a reasoning task 406b. For example, the large language model 440 may be configured to determine whether the task associated with a prompt template is a search task 406a or a reasoning task 406b

In some embodiments, the large language model 440 is configured to generate an output for a prompt template based at least in part on the intent classification for the prompt template. In response to determining that the intent classification for a prompt template is a search task 406a, the large language model 440 may be configured to perform, or otherwise execute, a search task based on the one or more instruction sets in the prompt template. In response to determining that the intent classification for a prompt template is a reasoning task 406b, the large language model 440 may be configured to perform, or otherwise execute, a reasoning task based on the one or more instruction sets in the prompt template.

In some embodiments, a search task 406a associated with a prompt template may comprise querying the data schema storage repository 450 based on the one or more instruction sets in the prompt template and retrieving a query response that comprises the answer to the search query. In some embodiments, a search task 406a may comprise generating a search query 410 (e.g., a search prompt) based on the one or more instruction sets in the prompt template and applying the search query 410 to the data schema storage repository 450 to obtain a query response corresponding to the search query.

In some embodiments, applying the search query 410 to the data schema storge 450 comprises searching, based on the one or more instruction sets in the prompt template, design metadata files 418a-n (described above) to obtain a query response to the search query. The query response may comprise data associated with the asset and that is relevant for generating controller logic for a controller associated with the asset. The query response, for example, may comprise data about certain aspects of the asset and/or data about the asset that is used in one or more steps/operations of the controller logic generation workflow (described above). The query response (e.g., search variable 422), for example, may be input data for controller logic generation operation associated with next prompt template in the sequence and/or one or more other subsequent prompt templates in the prompt template set 404a-n.

In some embodiments, the large language model 440 is configured to generate a search query 410 in response to determining the that the intent classification for the prompt template is a search task and output, or otherwise provide, the search query 410 to an orchestrator agent. The orchestrator agent may be configured to apply the search query to the data schema storage repository 450 (e.g., query the data schema storage) and obtain a corresponding query response from the data schema storage repository 450. In some embodiments, the orchestrator agent may provide the query response to the large language model 440. In some embodiments, the query response is provided to the large language model 440 in the form of an updated prompt 414 (e.g., formatted prompt). For example, the orchestrator agent may generate an updated prompt that includes the query response and provide the updated prompt as input to the large language model. In some embodiments, the query response may be input to the next prompt template and/or a subsequent prompt templates in the prompt template set. The query response, for example, may be applied to the next prompt template and/or other subsequent prompt template to generate an updated prompt 414.

In some embodiments, a final predictive output 460 is generated based at least in part on the output of each prompt template. For example, in some embodiments, the large language model 440 is configured to generate a final predictive output 460 comprising controller logic configuration file based on the output of each prompt template. The last prompt template, for example, may comprise one or more instruction sets that directs the large language model to generate and output a controller logic configuration file. In some embodiments, the final predictive output 460 is a PLC logic configuration file comprising PLC ladder logic for a PLC controller configured to control and/or monitor the asset. In some embodiments, the final predictive output is a DCS logic configuration file comprising DCS logic configured to control and/or monitor the asset. In other embodiments, the final predictive output 460 may comprise other controller logic.

In some embodiments, one or more prediction-based actions is initiated based on the final predictive output 460. In some embodiments, the one or more prediction-based actions comprises applying the predictive output (e.g., controller logic) to the controller to operate the controller. In some embodiments, the predictive output is automatically applied to the controller. For example, in some embodiments, the controller logic output may be deployed to cause operation of the controller based on the controller logic output. In some embodiments, the one or more prediction-based actions comprises transmitting instructions to one or more computing entities and/or the controller, where the instructions are configured to cause the controller logic output to be implemented or otherwise integrated into the controller such that the controller may be operated based on the controller logic output. In some embodiments, the one or more prediction-based actions comprises providing the controller logic configuration file to one or more client computing entities. In some embodiments, the one or more prediction-based actions comprises causing rendering of a user interface comprising the controller logic output. In some embodiments, the one or more prediction-based actions comprises generating data and/or transmitting instructions configured to cause rendering of the user interface and/or display of the controller logic output on the user interface.

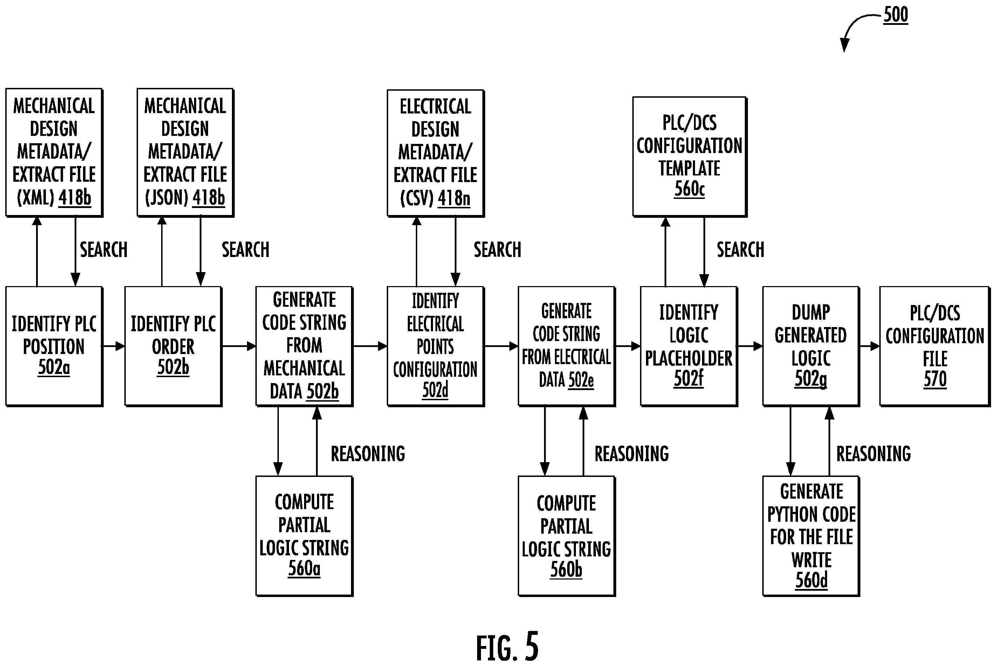

FIG. 5 illustrates an operational example of a controller logic generation workflow 500 in accordance with at least one example embodiment of the present disclosure. In particular, FIG. 5 illustrates an operational example of a PLC/DCS logic generation workflow 500 comprising steps/operations 502a-g (and associated step/operations 560a-d) for controller associated with a conveyor system. In some embodiments, the controller logic generation workflow may be generated based on domain expert knowledge and one or more design metadata files (e.g., such as design metadata files 418a-n) extracted from one or more past model/drawing representations for the one or more conveyor systems. In some embodiments, the output of the logic generation workflow 500 is a PLC configuration file or DCS configuration file.

In the illustrated example, the controller logic generation workflow may comprise searching for physical locations in the conveyor system using information from the design metadata (e.g., mechanical metadata, electrical metadata, and/or the like) obtained from a model/drawing representation of the conveyor system or environment associated with the asset. The order of the physical locations may then be determined from the mechanical metadata. One or more reasoning tasks, such as, for example, logical reasoning tasks may be performed to generate partial PLC logic based on the position and order information.

Electrical configuration data describing electrical configuration of the PLC hardware may be identified by searching the electrical metadata. One or more reasoning tasks (e.g., logical reasoning task(s), or the like) may be performed based on the electrical configuration data to generate the remaining PLC logic.

Subsequently, placeholders in the PLC configuration template file 560c may be identified and filled with appropriate logic based on the domain expert knowledge. Further reasoning tasks may then be performed to generate a final PLC logic configuration file. As shown in FIG. 5, in some embodiments, a code (e.g., python code or the like) may be generated for the file write. A controller configuration file 570 (e.g., PLC configuration, DCS configuration file, or the like) may be outputted.

### EXAMPLE PROCESSES OF THE DISCLOSURE

Having described example systems and apparatuses, and data visualizations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

Although the example processes depicts a particular sequence of operations, the sequence may be altered without departing from the scope of the present disclosure. For example, some of the operations depicted may be performed in parallel or in a different sequence that does not materially affect the function of the processes.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

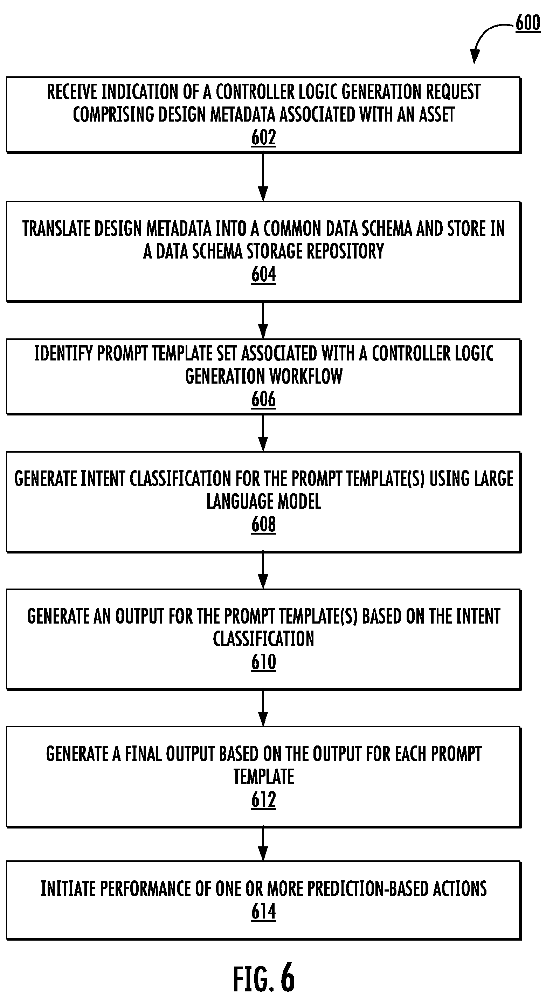

FIG. 6 illustrates a flowchart diagram of an example process for implementing a context-aware generative framework for embedded controller logic in accordance with at least some embodiments of the present disclosure. In some embodiments, the process 600 is embodied by computer program code stored on a non-transitory computer-readable storage medium of a computer program product configured for execution to perform the process as depicted and described. Alternatively or additionally, in some embodiments, the process 600 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with separate component(s) of a network, external network(s), and/or the like, to perform one or more of the operation(s) as depicted and described. For purposes of simplifying the description, the process 600 is described as performed by and from the perspective of the apparatus 200.

Although the example process 600 depicts a particular sequence of operations, the sequence may be altered without departing from the scope of the present disclosure. For example, some of the operations depicted may be performed in parallel or in a different sequence that does not materially affect the function of the process 600. In other examples, different components of an example device or system that implements the process 600 may perform functions at substantially the same time or in a specific sequence.

In some embodiments, the process includes at step/operation 602 receiving indication of controller logic generation request associated with an asset identifier. For example, the apparatus 200 may receive a controller generation request. The controller logic generation request may describe a request to generate controller logic for a controller associated with the asset identified by the asset identified. The controller may be configured to control and/or monitor the asset. The controller logic generation request may comprise design metadata extracted from one or more model/drawing representations of the asset (or portion thereof). The design metadata may comprise mechanical metadata, electrical metadata, and/or the like.

In some embodiments, the process 600 includes, at step/operation 604 translating the design metadata into a common data schema and storing the translated design metadata in a data schema storage repository. For example, the apparatus 200 may translate a design metadata file into a common data schema and store the translated design metadata in a data schema storage repository.

In some embodiments, the process 600 includes, at step/operation 606, identifying a prompt template set. For example, the apparatus 200 may identify a prompt template set associated with a domain-specific controller logic generation workflow associated with the asset identifier. The controller logic generation workflow may comprise steps/operations for generating controller logic for operating a controller configured to control and/or monitor the asset. The controller, for example, may comprise a PLC, a DCS controller, and/or the like.

In some embodiments, the process 600 includes at step/operation 608 generating an intent classification for a prompt template. For example, the apparatus 200 using a large language model may generate an intent classification for a prompt template. The apparatus 200 may provide the prompt template as input to the large language model. The large language model may output an intent classification for the prompt template. The large language model may be configured, trained, and/or the like to generate an intent classification for the prompt template based on the one or more instruction sets in the prompt template. In some embodiments, the intent classification is a search task intent classification or a reasoning task intent classification. The apparatus 200 using the large language model, as described above, may generate an intent classification for each prompt template of the prompt template set associated with the controller logic generation workflow.

In some embodiments, the prompt template set comprises a sequence of prompt templates, where each prompt template corresponds to a step/operation (or a portion of a step operation) associated with the controller logic generation workflow. In some embodiments, the prompt template set are provided as input to the large language model in a sequential manner (e.g., based on a sequence position identifier associated with a respective prompt template). In some embodiments, the prompt template set are provided as input to the large language model in as single input with each prompt template associated with a sequence position identifier.

In some embodiments, the process 600 includes at step/operation 610 generating, using the large language model, an output for a prompt template based at least in part on the intent classification for the prompt template. The apparatus 200, using the large language model may generate an output for each prompt template in a sequential manner and based on the intent classification for the prompt template.

In response to determining that the intent classification for a prompt template is a search task, the large language model may perform, or otherwise execute, a search task based on the one or more instruction sets in the prompt template. In some embodiments, a search task may comprise querying a data schema storage repository based on the one or more instruction sets in the prompt template and receiving a corresponding query response. In response to determining that the intent classification for a prompt template is a reasoning task, the large language model may perform, or otherwise execute, a reasoning task based on the one or more instruction sets in the prompt template. In some embodiments, the corresponding output for a particular prompt template may be input to the next prompt template in the sequence and/or one or more other subsequent prompt template in the prompt template set.

In some embodiments, the process 600 includes at step/operation 612, generating a final output. For example, the apparatus 200 may generate a final predictive output (e.g., PLC ladder logic configuration document/file, DCS logic configuration document/file, or the like) based on the output of each prompt template. The last prompt template, for example, may comprise one or more instruction sets that directs the large language model to generate and output a controller logic.

In some embodiments, the process 600 includes at step/operation 614, initiating the performance of one or more prediction-based actions based on the final output. In some embodiments, the one or more prediction-based actions may comprise any of the prediction-based actions described above with respect to FIG. 4.

### CONCLUSION

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method for generating controller logic, the computer-implemented method comprising:
receiving, by one or more processors, indication of a controller logic generation request associated with an asset identifier;
identifying, by the one or more processors and based on the asset identifier, a prompt template set associated with a controller logic generation workflow, wherein each prompt template of the prompt template set comprises one or more instruction sets;
inputting, by the one or more processors, the prompt template set into a large language model comprising one or more transformer neural networks and configured to generate a controller logic configuration file for the asset identifier based on the prompt template set and intent classification associated with each prompt template;
receiving, by the one or more processors and from the large language model, the controller logic configuration file; and
initiating, by the one or more processors, performance of one or more prediction-based actions based on the controller logic configuration file.

2. The computer-implemented method of claim 1, further comprising:
determining, using the large language model, the intent classification for a prompt template, wherein the intent classification is one of a search task or a reasoning task.

3. The computer-implemented method of claim 2, further comprising:
in response to determining that the intent classification is a search task, generating, using the large language model, a search query based on the prompt template; and
retrieving, from a repository and based on the search query, relevant data associated with the asset identifier, wherein the repository comprises design metadata for an asset associated with the asset identifier.

4. The computer-implemented method of claim 2, further comprising:
in response to determining that the intent classification is a reasoning task, generating, by the large language model, an output corresponding to the prompt template by performing one or more logical reasoning tasks based on the one or more instruction sets in the prompt template.

5. The computer-implemented method of claim 1, wherein the controller logic generation workflow defines a sequence of operations for generating the controller logic configuration file, wherein the one or more instruction sets in each prompt template corresponds to a particular operation in the sequence of operations.

6. The computer-implemented method of claim 5, wherein the prompt template set comprises a plurality of sequential prompt templates corresponding to the sequence of operations defined by the controller logic generation workflow, wherein the large language model is configured to process each prompt template in a sequential order to generate an output for each prompt template.

7. The computer-implemented method of claim 1, wherein the controller logic configuration file is one of a PLC logic configuration file or DCS logic configuration file.

8. The computer-implemented method of claim 1, wherein the performance of the one or more prediction-based actions comprises applying the controller logic configuration file to a controller associated with an asset associated with the asset identifier.

9. The computer-implemented method of claim 1, wherein the indication of the controller logic generation request comprises one or more design metadata files associated with the asset identifier and having disparate formats, and the computer-implemented method further comprises:
translating the one or more design metadata files into a common format; and
storing the one or more design metadata files in a repository.

10. The computer-implemented method of claim 1, further comprising:
fine-tuning the one or more transformer neural networks based on domain-specific controller operations data.

11. An apparatus for generating controller logic, the apparatus comprising at least one processor and at least one memory storing instructions that, when executed by the at least one processor, cause the apparatus to:
receive indication of a controller logic generation request associated with an asset identifier;
identify based on the asset identifier, a prompt template set associated with a controller logic generation workflow, wherein each prompt template of the prompt template set comprises one or more instruction sets;
input the prompt template set into a large language model comprising one or more transformer neural networks and configured to generate a controller logic configuration file for the asset identifier based on the prompt template set and intent classification associated with each prompt template;
receive, from the large language model, the controller logic configuration file; and
initiate performance of one or more prediction-based actions based on the controller logic configuration file.

12. The apparatus of claim 11, wherein the apparatus is further caused to:
determine, using the large language model, the intent classification for a prompt template, wherein the intent classification is one of a search task or a reasoning task.

13. The apparatus of claim 12, wherein the apparatus is further caused to:
in response to determining that the intent classification is a search task, generate, using the large language model, a search query based on the prompt template; and
retrieve, from a repository and based on the search query, relevant data associated with the asset identifier, wherein the repository comprises design metadata for an asset associated with the asset identifier.

14. The apparatus of claim 12, wherein the apparatus is further caused to:
in response to determining that the intent classification is a reasoning task, generate, by the large language model, an output corresponding to the prompt template by performing one or more logical reasoning tasks based on the one or more instruction sets in the prompt template.

15. At least one non-transitory computer-readable storage medium for generating controller logic, the at least one non-transitory computer-readable storage medium having computer coded instructions configured to, when executed by at least one processor:
receive indication of a controller logic generation request associated with an asset identifier;
identify based on the asset identifier, a prompt template set associated with a controller logic generation workflow, wherein each prompt template of the prompt template set comprises one or more instruction sets;
input the prompt template set into a large language model comprising one or more transformer neural networks and configured to generate a controller logic configuration file for the asset identifier based on the prompt template set and intent classification associated with each prompt template;
receive, from the large language model, the controller logic configuration file; and
initiate performance of one or more prediction-based actions based on the controller logic configuration file.
